# EUROPÄISCHE PATENTSCHRIFT

(11) **EP 3 926 971 B1**
(45) Veröffentlichungstag und Bekanntmachung des Hinweises auf die Patenterteilung: **28.08.2024**
(21) Anmeldenummer: 21179048.0
(22) Anmeldetag: 11.06.2021
(51) Int. Cl.: H04Q 9/00

(54) **SYSTEM UND VERFAHREN ZUM BEREITSTELLEN VON REGELENERGIE**
SYSTEM AND METHOD FOR PROVIDING CONTROL ENERGY
SYSTÈME ET PROCÉDÉ DE FOURNITURE D'ÉNERGIE DE RÉGULATION

(30) Priorität: 18.06.2020 DE 102020116122
(43) Veröffentlichungstag der Anmeldung: 22.12.2021
(73) Patentinhaber: Innogy SE, 45128 Essen (DE)
(72) Erfinder: Gaul, Armin, 59379 Selm (DE)
(74) Vertreter: Gunzelmann, Rainer

(56) Entgegenhaltungen:
- US-A1- 2012 059 528

## Beschreibung

### TECHNISCHES GEBIET

Die vorliegende Offenbarung betrifft ein System und ein Verfahren zum Bereitstellen von Regelenergie.

### HINTERGRUND

Intelligente Messsysteme, sogenannte "Smart Metering"-Systeme, umfassen ein als eine Kommunikationseinheit ausgebildetes Smart-Meter-Gateway (SMGw), welches elektronische Messeinrichtungen in einem Lokalen Metrologischen Netz (LMN) mit verschiedenen Marktteilnehmern (beispielsweise einem Gateway-Administrator (GwA) im Auftrag eines Messstellenbetreibers, einem Verteilnetzbetreiber oder einem Energielieferanten) in einem Weitverkehrsnetz (WAN) und einem lokalen Heimnetz (HAN) verbindet. Das SMGw stellt sicher, dass alle Kommunikationsverbindungen verschlüsselt werden und dass nur mit bekannten Teilnehmern und Geräten kommuniziert wird.

Die elektronischen Messeinrichtungen sind sogenannte "intelligente Zähler" oder "Smart Meter", bei denen es sich um in das LMN eingebundene digitale Zähler handelt, die insbesondere den Verbrauch von Strom, Gas, Wasser und Fernwärme zählen. Die Smart Meter senden die erhobenen Verbrauchs- und Einspeisewerte sowie Netzzustandsdaten (z.B. Spannung, Phasenwinkel und Frequenz) an das SMGw, wo sie gespeichert und weiterverarbeitet werden. Das SMGw nutzt unterschiedliche Regelwerke um die empfangenen Messwerte weiterzuverarbeiten. Über eine WAN-Schnittstelle kann das SMGw mit externen Marktteilnehmern (EMT) und dem GWA kommunizieren. Bei den EMT kann es sich beispielsweise um einen Netzbetreiber oder einen Messstellenbetreiber handeln.

Der GWA ist sowohl für die Konfiguration als auch für den sicheren Betrieb des SMGw verantwortlich. Aus Gründen der Sicherheit gehen sämtliche Kommunikationsverbindungen vom SMGw aus.

Über eine HAN-Schnittstelle können an das SMGw steuerbare Geräte, wie beispielsweise Wärmepumpen oder Photovoltaikanlagen angeschlossen werden, um EMTs einen Zugriff für Steuerungs- und Fernwartungszwecke zu ermöglichen. Über die HAN-Schnittstelle kann der Letztverbraucher seine Verbrauchs- und, falls vorhanden, Einspeisewerte abfragen. Er erhält nach erfolgreicher Authentifizierung lesenden Zugriff auf seine Daten. Jeder Datenversand wird dabei in einem Letztverbraucher-Logbuch protokolliert.

Ebenfalls über die HAN-Schnittstelle ist es Servicetechnikern möglich, Informationen über den Systemzustand des SMGw abzufragen. Aus Datenschutzgründen haben Servicetechniker jedoch keinen Zugriff auf die im SMGw hinterlegten Messwerte bzw. kundenspezifischen Daten.

Die EMTs haben Interesse, Zugriffe auf die Messwerte der Smart-Meter zu erhalten, da diese für Netzanalyse- und Netzplanungszwecke hilfreich sein können.

Aus Datenschutzgründen (beispielsweise aufgrund der Datenschutz-Grundverordnung (DSGVO) in Deutschland) ist jedoch eine Nutzung personenbezogener Daten ohne Rechtsgrundlage und Einwilligung nicht erlaubt. Mit Hilfe von Smart-Metern erzeugter Daten besteht nämlich die Möglichkeit, Nutzungsprofile einzelner Personen zu erstellen. Auf Grundlage des Stromverbrauchs eines Haushalts lässt sich beispielsweise feststellen, wann ein Verbraucher zu Bett geht, wie er seine Mahlzeiten zubereitet, wie häufig er seine Waschmaschine nutzt und wann er nicht zu Hause ist.

Die US 2012/059528 A1 betrifft einen Server, an den mehrere Stromzähler angeschlossen sind, die jeweils den Stromverbrauch eines elektrischen Gerätes messen. Der Server umfasst eine Empfangseinheit, eine Speichereinheit und eine Recheneinheit. Die Empfangseinheit empfängt ein Berechnungsergebnis. Das Berechnungsergebnis wird auf der Grundlage des Stromverbrauchs, der von jedem der mehreren Stromzähler gemessen wird, und einer Zufallszahl, die gemäß einer Wahrscheinlichkeitsverteilung von jedem der mehreren Stromzähler erzeugt wird, berechnet. Die Speichereinheit speichert Parameter zur Erzeugung von Zufallszahlen. Die Recheneinheit berechnet aus den Berechnungsergebnissen und den Parametern einen Schätzwert für die Summe oder den Durchschnitt der Stromverbrauchswerte.

Der vorliegenden Offenbarung liegt die Aufgabe zugrunde, Netzinstabilitäten (Unterfrequenzen) zu vermeiden.

Gemäß einer bevorzugten Ausführungsform wird ein System und ein Verfahren gemäß Ansprüche 1 und 10 vorgeschlagen. Weiter wird ein Smart-Meter-Gateway (SMGw) vorgeschlagen, das ein erstes Kommunikationsmodul, das dazu eingerichtet ist, Messwerte von einem Zähler zu empfangen, eine erste Verarbeitungsvorrichtung, die dazu eingerichtet ist, den empfangenen Messwerten mathematisches Rauschen hinzuzufügen um verrauschte Messwerte zu erhalten, und ein zweites Kommunikationsmodul, das dazu eingerichtet ist, die verrauschten Messwerte an einen Server zu senden, umfasst.

Bei den Messwerten kann es sich um jegliche Art von Daten handeln, die von einem Zähler an ein SMGw gesendet werden. Dabei handelt es sich insbesondere um digitale Messwerte für Strom, Gas, Wasser, Energie und Fernwärme. Andere Messwerte, wie beispielsweise Wind, Sonneneinstrahlung und Temperatur, sind auch denkbar.

Bei dem ersten Kommunikationsmodul kann es sich um ein LMN-Kommunikationsmodul handeln, welches digitale Messwerte von mindestens einem intelligenten Zähler empfängt. Der Empfang der digitalen Messwerte kann in bestimmten Zeitintervallen oder in Echtzeit erfolgen. Die Messwerte können in Gruppen oder einzeln empfangen werden. Die empfangen Messwerte können in einer Speichervorrichtung in dem SMGw gespeichert werden.

Bei dem zweiten Kommunikationsmodul kann es sich um ein WAN-Kommunikationsmodul handeln, welches verarbeitete digitale Messwerte an einen EMT, beispielsweise einen Server, sendet.

Bei der ersten Verarbeitungsvorrichtung kann es sich um eine Recheneinheit handeln, die den empfangenen Messwerten mathematisches Rauschen hinzuzufügt, um verrauschte Messwerte zu erhalten. Dazu kann die Recheneinheit die gespeicherten digitalen Messwerte von der Speichervorrichtung lesen, diese Verrauschen und dann vor dem Versenden durch das zweite Kommunikationsmodul erneut in der Speichervorrichtung speichern. Bei dem mathematischen Rauschen handelt es sich um zufälliges Rauschen, insbesondere Zahlenwerte, welche mit Hilfe einer Zufallsfunktion erzeugt werden. So kann die Verarbeitungsvorrichtung einen Zufallsgenerator umfassen. Insbesondere kann die gleiche Zufallsfunktion für alle Messwerte verwendet werden. Zum Verrauschen der empfangenen Messwerte kann zu jedem Messwert eine Zufallszahl addiert werden.

Durch das Verrauschen der digitalen Messwerte werden diese anonymisiert, d.h., haben keinen Bezug mehr zum Letztverbraucher (Kunden). Aufgrund des Verrauschens wird auch jeder einzelne Messwert für eine Analyse unbrauchbar.

Zum Verrauschen der digitalen Messwerte kann die erste Verarbeitungsvorrichtung ferner dazu eingerichtet sein, auf die empfangenen Messwerte eine symmetrische Verteilung, insbesondere eine Normalverteilung, eine Gleichverteilung und/oder eine Laplace-Verteilung, anzuwenden.

Vorzugsweise sind die von dem zweiten Kommunikationsmodul an den Server gesendeten Messwerte nicht mit Zeitdaten oder Nutzerdaten assoziiert. Dazu kann die erste Verarbeitungsvorrichtung vor dem Versenden der verrauschten Messwerte an den Server jeglichen Bezug zur Messzeit und zum Nutzer von den Messwerten entfernen.

Das SMGw kann ferner eine Sicherheitsmodul umfassen, welches die verrauschten Messwerte vor dem Senden an den Server verschlüsselt. Insbesondere kann das zweite Kommunikationsmodul dazu eingerichtet sein, einen verschlüsselten durchgängigen Kommunikationstunnel (TLS - Transport Layer Security) zwischen SMGw und Server auf Internetprotokoll (IP)-Basis bereitzustellen. Vorzugsweise erfolgt die Verschlüsselung gemäß der Technischen Richtlinie BSI TR-03109-2.

Ein zweiter Aspekt betrifft einen Zähler, der eine Messvorrichtung, die dazu eingerichtet ist, Ressourcenverbräuche zu messen, eine zweite Verarbeitungsvorrichtung, die dazu eingerichtet ist, den gemessenen Ressourcenverbräuchen mathematisches Rauschen hinzuzufügen um verrauschte Messwerte zu erhalten, und ein drittes Kommunikationsmodul, das dazu eingerichtet ist, die verrauschten Messwerte an ein Smart-Meter-Gateway zu senden, umfasst.

Bei dem Zähler kann es sich um jede Art von digitalem Zähler handeln, der dazu eingerichtet ist, Ressourcenverbräuche zu Messen. Vorzugsweise handelt es sich bei dem Zähler um einen intelligenten Zähler. Beispielsweise handelt es sich bei dem Zähler um einen Stromzähler, sowie ein Standardlastprofil- (SLP) Smart-Meter, einen intelligenten Zweirichtungszähler, ein registrierende Leistungsmessung- (RLM) Smart-Meter oder ein Stromzähler mit Kommunikationsadapter für Bestandsanlagen-(BAB) Adapter. Bei den Ressourcen kann es sich insbesondere um digitale Messwerte für Strom, Gas, Wasser, Energie und Fernwärme handeln. Andere Messwerte, wie beispielsweise Wind, Sonneneinstrahlung und Temperatur, sind auch denkbar. Entsprechend den gemessenen Ressourcen sind passende intelligente Zähler verwendbar.

Die Hinzufügung von mathematischem Rauschen zu den Ressourcenverbräuchen kann wie vorstehend hinsichtlich der Hinzufügung von mathematischem Rauschen zu den Messwerten in dem SMGw beschrieben erfolgen.

Die zweite Verarbeitungsvorrichtung kann ferner dazu eingerichtet sein, auf die gemessenen Ressourcenverbräuche eine symmetrische Verteilung, insbesondere eine Normalverteilung, eine Gleichverteilung und/oder eine Laplace-Verteilung, anzuwenden.

Vorzugsweise sind die von dem dritten Kommunikationsmodul an das Smart-Meter-Gateway gesendeten Messwerte nicht mit Zeitdaten oder Nutzerdaten assoziiert.

Das SMGw und der Zähler können auch in einer Einheit bzw. einem Gehäuse integriert sein.

Ein dritter Aspekt betrifft einen Server mit einer Empfangsvorrichtung, die dazu eingerichtet ist, verrauschte Messwerte von einer Vielzahl von Smart-Meter-Gateways zu empfangen, und einer Recheneinheit, die dazu eingerichtet ist, die verrauschten Messwerte der Vielzahl von Smart-Meter-Gateways zu aggregieren.

Bei dem Server kann es sich insbesondere um einen Webserver handeln, auf den mit Hilfe eines Web-Clients zugegriffen werden kann. Bei der Empfangsvorrichtung kann es sich insbesondere um ein WAN-Kommunikationsmodul handeln, welches mit einer Vielzahl von SMGWs in Kommunikationsverbindung steht und verrauschte Messwerte von den SMGWs empfängt. Die Recheneinheit aggregiert, d.h. addiert, die Vielzahl von verrauschten Messwerten. Der Server kann ferner eine Speichereinheit zum Speichern der empfangen Messwerte und der aggregierten Messwerte aufweisen.

Durch die Aggregation der verrauschten Messwerte wird der durch das Rauschen verursachte Fehler mit jedem zusätzlichen Datensatz kleiner, da sich der aufgeprägte Fehler in der Aggregation mathematisch minimiert, während die Messwerte unverfälscht addiert werden. Folglich sollte die Anzahl von aggregierten Messwerten nicht zu gering sein. Somit können aus den anonymisierten Messwerten für einen Netzbetreiber nutzbare Daten erzeugt werden.

Der Server kann ferner eine Visualisierungsvorrichtung umfassen, die dazu eingerichtet ist, die aggregierten Messwerte zur Visualisierung für einen Nutzer aufzubereiten.

Des Weiteren umfasst der Server eine Benachrichtigungsvorrichtung, die dazu eingerichtet ist, die aggregierten Messwerte mit einem vorgegebenen Grenzwert zu Vergleichen und bei Überschreiten des vorgegebenen Grenzwerts eine Benachrichtigung auszugeben. Beispielsweise kann, wenn ein Stromverbrauch einer Gruppe von Haushalten einen kritischen Grenzwert überschreitet, was zu einer Netzinstabilität (Unterfrequenz) führen kann, ein Alarmsignal an eine Vorrichtung zum Bereitstellen von Regelenergie, die als ein Gas- oder Dieselaggregat ausgebildet ist, gesendet werden. Vorzugsweise ist auch, dass bei Überschreiten des vorgegebenen Grenzwerts die Regelenergie erhöht wird, vorzugsweise, dass die ausgegebene Benachrichtigung die Erhöhung der Regelenergie auslöst.

Ein vierter Aspekt betrifft ein Verfahren für ein Smart-Meter-Gateway, umfassend Empfangen von Messwerten von einem Zähler, Hinzuzufügen von mathematischem Rauschen zu den empfangenen Messwerten um verrauschte Messwerte zu erhalten, und Senden der verrauschten Messwerte an einen Server.

Ein fünfter Aspekt betrifft ein Verfahren für einen Zähler, umfassend Messen von Ressourcenverbräuchen, Hinzuzufügen von mathematischem Rauschen zu den gemessenen Ressourcenverbräuchen um verrauschte Messwerte zu erhalten, und Senden der verrauschten Messwerte an ein Smart-Meter-Gateway.

Ein sechster Aspekt betrifft ein Verfahren für einen Server, umfassend Empfangen von verrauschten Messwerten von einer Vielzahl von Smart-Meter-Gateways, und Aggregieren der empfangenen verrauschten Messwerte der Vielzahl von Smart-Meter-Gateways.

### KURZE BESCHREIBUNG DER ZEICHNUNGEN

Weitere Vorteile, Einzelheiten und Merkmale der hier beschriebenen Verfahren, Vorrichtungen und Systeme ergeben sich aus der nachfolgenden Beschreibung von Ausführungsbeispielen sowie aus den Figuren.
Fig. 1 zeigt eine schematische Ansicht eines ersten Ausführungsbeispiels einer Smart-Metering-Anordnung mit mehreren Smart-Metern, einem SMGw und einem Server;
Fig. 2 zeigt eine schematische Ansicht eines Ausführungsbeispiels eines SMGw;
Fig. 3 zeigt eine schematische Ansicht eines Ausführungsbeispiels eines Servers.
Fig. 4 zeigt eine schematische Ansicht eines zweiten Ausführungsbeispiels einer Smart-Metering-Anordnung mit mehreren Smart-Metern, einem SMGw und einem Server;
Fig. 5 zeigt eine schematische Ansicht eines Ausführungsbeispiels eines intelligenten Zählers;
Fig. 6 zeigt eine erste beispielhafte Reihe von Messwerten mit verrauschten Messwerten; und
Fig. 7 zeigt eine zweite beispielhafte Reihe von Messwerten mit verrauschten Messwerten.

### DETAILLIERTE BESCHREIBUNG

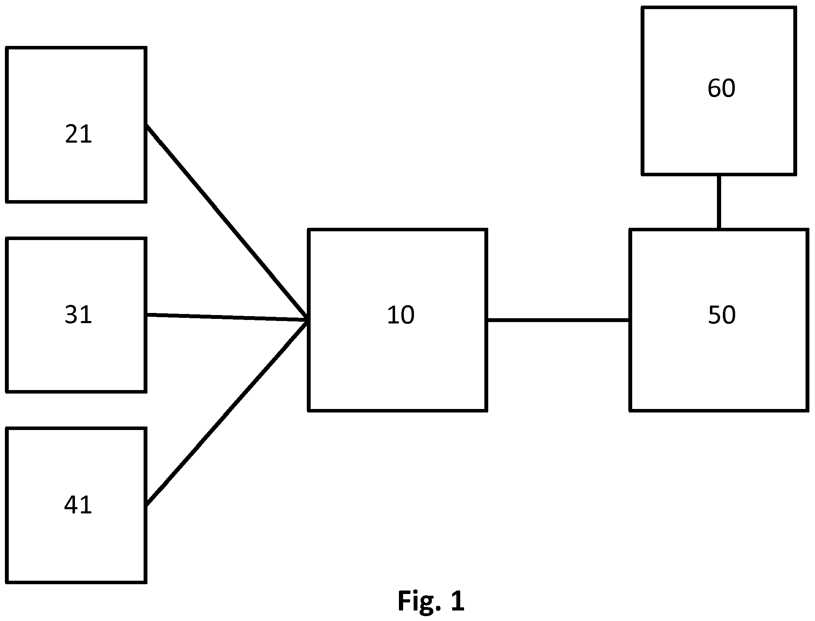

Die Fig. 1 zeigt eine schematische Ansicht eines ersten Ausführungsbeispiels einer Smart-Metering-Anordnung mit mehreren Smart-Metern, einem SMGw und einem Server.

Bei den Smart-Metern 21, 31 und 41 handelt es sich um handelsübliche intelligente Stromzähler, die in einem Dreifamilienhaus (nicht gezeigt) den Stromverbrauch dreier Parteien messen. Die Stromzähler senden die von Ihnen gemessenen Strommesswerte über eine LMN-Netzwerk an das SMGw 10. Die Fig. 1 zeigt ferner einen Server 50, der mit dem SMGw 10 in Kommunikationsverbindung steht und einen Laptop-Computer 60, der über das Internet auf den Server 50 zugreifen kann.

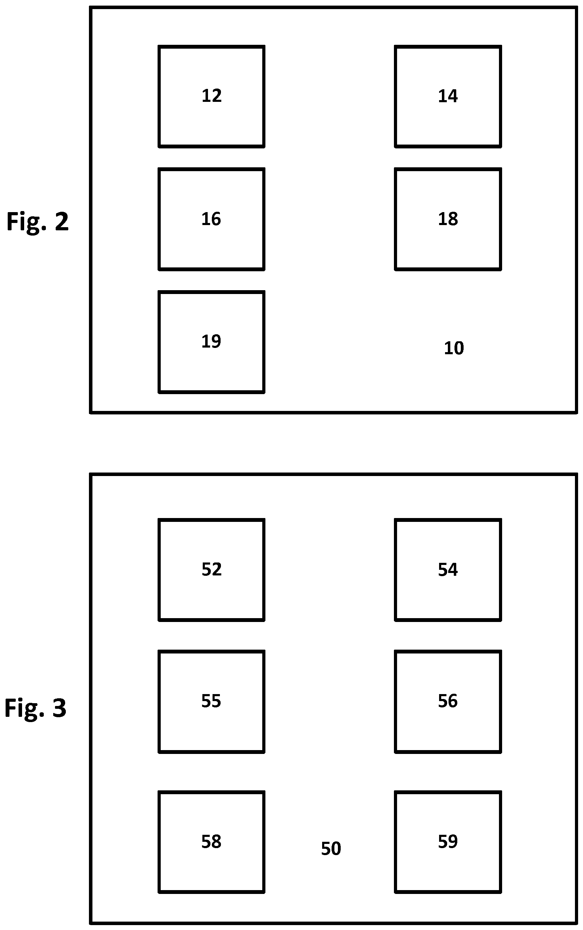

Die Fig. 2 zeigt eine schematische Ansicht eines Ausführungsbeispiels eines SMGw 10. Insbesondere handelt es sich bei dem SMGw 10 um das in der Fig. 1 gezeigte SMGw 10.

Das SMGw 10 umfasst ein LMN-Kommunikationsmodul 12 zum Empfangen von Stromesswerten von den Stromzählern 21, 31, 41, eine Verarbeitungsvorrichtung 14 zum Hinzufügen von mathematischem Rauschen zu jedem der empfangenen Stromesswerte um verrauschte Messwerte zu erhalten, und ein WAN-Kommunikationsmodul 16 zum Senden der verrauschten Messwerte an den Server 50 (siehe Fig. 1). Die empfangenen und die verrauschten Messwerte werden in einer Speichervorrichtung 18 gespeichert. Das SMGw 10 umfasst ferner ein optionales Sicherheitsmodul 19, welches die verrauschten Messwerte vor dem Senden an den Server 50 verschlüsselt.

Unter Bezugnahme auf die Figs. 1 und 2 wird ein beispielhaftes Verfahren zum Anonymisieren von Messwerten wie folgt beschrieben. Die Stromzähler 21, 31, 41 messen jeweilige Stromwerte und schicken diese in Echtzeit über ein LMN-Netzwerk an das SMGw 10. Das LMN-Kommunikationsmodul 12 empfängt diese Messwerte und speichert sie in der Speichervorrichtung 18. Die in der Speichervorrichtung 18 gespeicherten Messwerte werden von der Verarbeitungsvorrichtung 14 aus der Speichervorrichtung 18 gelesen und jeweils mit einem mathematischen Rauschwert verrauscht. Dazu wird zu jedem Messwert ein Zufallswert addiert. Ab diesem Zeitpunkt sind die Messwerte anonymisiert. Anschließend werden die verrauschten Messwerte in der Speichervorrichtung 18 gespeichert, ehe sie von dem Sicherheitsmodul 19 verschlüsselt und von dem WAN-Kommunikationsmodul 16 über ein WAN-Netzwerk an den Server 50 gesendet werden. Somit verlassen nur anonymisierte Messwerte das SMGw 10.

Die Fig. 3 zeigt eine schematische Ansicht eines Ausführungsbeispiels eines Servers. Insbesondere handelt es sich bei dem Server 50 um den in der Fig. 1 gezeigten Server 50.

Der Server 50 umfasst eine WAN-Empfangsvorrichtung 52 zum Empfangen von verrauschten Messwerten von mindestens einem Smart-Meter-Gateway 10, eine Recheneinheit 54 zum Aggregieren der empfangenen verrauschten Messwerte, eine Speichervorrichtung 55 zum Speichern von Messwerten, eine Visualisierungsvorrichtung 56 zur Aufbereitung der aggregierten Messwerte für eine Nutzervisualisierung für einen Nutzer, eine Benachrichtigungsvorrichtung 58 zum Vergleichen der aggregierten Messwerte mit einem vorgegebenen Grenzwert und bei Überschreiten des vorgegebenen Grenzwerts Ausgeben einer Benachrichtigung, und ein Sicherheitsmodul 59, welches die von der WAN-Empfangsvorrichtung 52 empfangenen verrauschten Messwerte entschlüsselt.

Unter Bezugnahme auf die Figs. 1 bis 3 wird ein beispielhaftes Verfahren zum Verarbeiten von anonymisierten Messwerten wie folgt beschrieben. Die WAN-Empfangsvorrichtung 52 empfängt eine Vielzahl von verschlüsselten und verrauschten Messwerten von dem SMGw 10 und speichert sie in der Speichervorrichtung 55. Zusätzlich empfängt die WAN-Empfangsvorrichtung 52 eine Vielzahl weiterer verschlüsselter und verrauschter Messwerten von einer Vielzahl weiterer SMGws (in Fig. 1 nicht gezeigt). Diese Vielzahl von weiteren SMGws kann baugleich zu dem SMGw 10 sein, wobei jedes SMGw Messwerte von mindestens einem intelligenten Zähler empfängt (in Fig. 1 nicht gezeigt).

Das Sicherheitsmodul 59 entschlüsselt die in der Speichervorrichtung 55 gespeicherten Messwerte und speichert sie in der Speichervorrichtung 55. Die Recheneinheit 54 liest die entschlüsselten Messwerte aus der Speichervorrichtung 55 und aggregiert sie. Durch die Aggregation (d.h. Addition) der Messwerte wird der Fehler mit jedem zusätzlichen Datensatz kleiner, da sich der aufgeprägte Fehler in der Aggregation mathematisch minimiert, während das Nutzsignal unverfälscht addiert wird. Folglich sollte die Anzahl von aggregierten Messwerten nicht zu gering sein.

Die aggregierten Daten sind anonymisiert, haben keinen Bezug zum Letztverbraucher (Kunden) und umfassen keine Zeitassoziationen. Dennoch sind die anonymisierten Daten beispielsweise für einen Verteilnetzbetreiber (VNB) von Nutzen, da sie immer noch die Zählerinformation enthalten. Handelt es sich bei den Messwerten beispielsweise um Strommesswerte, so erhält der VNB immer noch die Information ob ein hoher, ein normaler oder ein niedriger Stromverbrauch vorliegt. Diese Information kann dann von der Visualisierungsvorrichtung 56 zur Anzeige auf dem Labtop-Computer 60 aufbereitet werden.

Ferner ist es bevorzugt, dass die Benachrichtigungsvorrichtung 58 die aggregierten Messwerte mit einem vorgegebenen Grenzwert vergleicht und bei Überschreiten des vorgegebenen Grenzwerts ein Alarmsignal ausgibt und/oder eine Erhöhung einer Regelenergie auslöst.

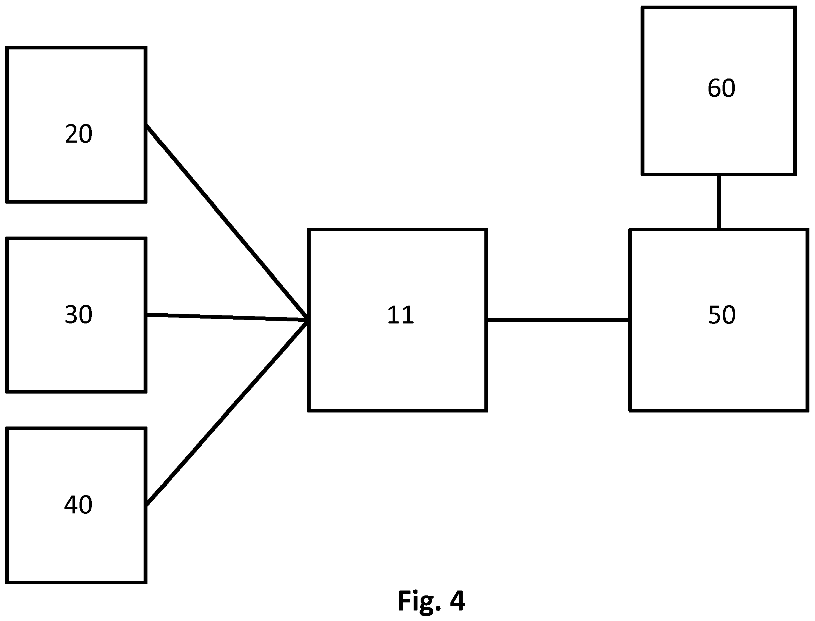

Die Fig. 4 zeigt eine schematische Ansicht eines zweiten Ausführungsbeispiels einer Smart-Metering-Anordnung mit mehreren Smart-Metern, einem SMGw und einem Server. Das zweite Ausführungsbeispiel der Fig. 4 unterscheidet sich von dem ersten Ausführungsbeispiel der Fig. 1 dadurch, dass das mathematische Verrauschen nicht im dem SMGw sondern in den intelligenten Zählern stattfindet.

Folglich unterscheidet sich die Fig. 4 von der Fig. 1 indem es sich in dem zweiten Ausführungsbeispiel der Fig. 4 bei dem SMGw 10 um einen handelsübliches SMGw handelt, jedoch die intelligenten Zähler 20, 30 und 40 modifiziert wurden. Die weiteren in der Fig. 4 gezeigten Elemente und Vorrichtungen entsprechen den in der Fig. 1 gezeigten Elementen und Vorrichtungen und es wird an dieser Stelle auf eine erneute Erläuterung verzichtet.

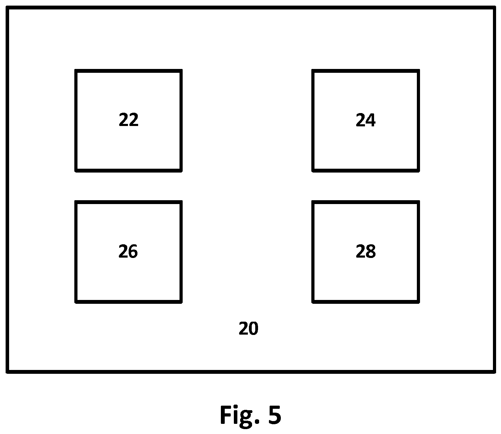

Die Fig. 5 zeigt eine schematische Ansicht eines Ausführungsbeispiels eines intelligenten Zählers. Insbesondere handelt es sich bei dem in der Fig. 5 gezeigten intelligenten Zähler 20 um den in der Fig. 4 gezeigten intelligenten Zähler 20. Die in der Fig. 4 gezeigten weiteren intelligenten Zähler 30 und 40 sind baugleich zu dem intelligenten Zähler 20.

Der intelligente Zähler 20 umfasst eine Messvorrichtung 22 zum Messen von Ressourcenverbräuchen, eine Verarbeitungsvorrichtung 24 zum Hinzufügen von mathematischem Rauschen zu den gemessenen Ressourcenverbräuchen um verrauschte Messwerte zu erhalten, ein Kommunikationsmodul 26 zum Senden der verrauschten Messwerte an ein Smart-Meter-Gateway 11, und eine Speichervorrichtung 28 zum Speichern von Messwerten. Bei den Messwerten der Ressourcenverbräuche kann es sich beispielsweise um digitale Messwerte für Strom, Gas, Wasser, Energie oder Fernwärme handeln. Andere Werte der intelligente Zähler sind auch denkbar.

Unter Bezugnahme auf die Figs. 4 und 5 wird ein beispielhaftes Verfahren zum Anonymisieren von Messwerten wie folgt beschrieben. Eine Strommessvorrichtung 22 misst den Stromverbrauch in einer Wohnung. Die Strommesswerte werden in der Speichervorrichtung 28 gespeichert. Die Verarbeitungsvorrichtung 24 liest die Strommesswerte aus der Speichervorrichtung 28 und fügt ihnen mathematisches Rauschen hinzu. Die Hinzufügung des mathematisches Rauschens kann wie in den vorstehenden Ausführungsbeispielen beschrieben erfolgen. Die verrauschten Messwerte werden in der Speichervorrichtung 28 gespeichert. Anschließend sendet das Kommunikationsmodul 26 die verrauschten Messwerte an das SMGw 11. Das SMGw 11 sendet die verrauschten Messwerte, die anonymisiert sind, an den Server 50, wo sie verarbeitet werden.

Entsprechende Verfahren wie vorstehend mit Bezug auf den intelligenten Zähler 20 beschrieben werden auch von den intelligenten Zählern 30 und 40 ausgeführt.

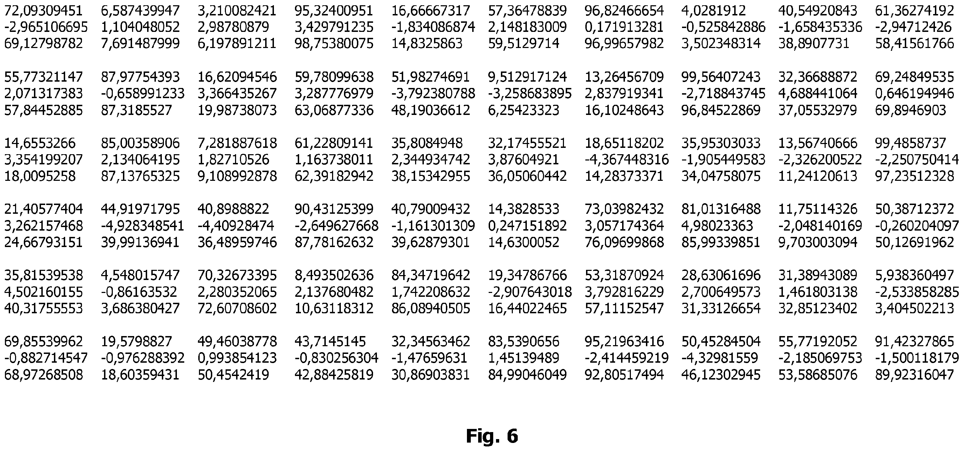

Die Fig. 6 zeigt eine erste beispielhafte Reihe von Messwerten mit verrauschten Messwerten. Die im Folgenden beschriebene Aggregation von verrauschten Messwerten kann beispielsweise von dem in den Figs. 1, 3 und 4 gezeigten Server 50 ausgeführt werden.

Die Messwerte sind in sechs Messwertgruppen mit jeweils drei Zeilen und jeweils zehn Spalten dargestellt. Die erste Zeile jeder Messwertgruppe umfasst Messwerte mit Kundenbezug. Die Messwerte mit Kundenbezug wurden in diesem Ausführungsbeispiel jeweils mit der Microsoft-Excel-Funktion (=ZUFALLSZAHL()*100) erzeugt. Bei jedem Messwert kann es sich beispielsweise um einen Strommesswert eines Haushalts handeln, der von einem Zähler gemessen wurde. Folglich zeigt die Fig. 6 in den ersten Zeilen der Messwertgruppen die Strommesswerte von 60 Haushalten.

Die zweite Zeile jeder Messwertgruppe zeigt mathematische Rauschwerte, d.h., die eingebauten Fehler. Die mathematischen Rauschwerte wurden jeweils mit der Microsoft-Excel-Funktion (=ZUFALLSZAHL()*10)-5) erzeugt.

Die dritte Zeile jeder Messwertgruppe zeigt die verrauschten Messwerte, welche jeweils durch Addition des Messwerts mit Kundenbezug und dem mathematischen Rauschwert erhalten wurden.

Eine Addition aller Messwerte mit Kundenbezug ergibt den Wert 454 und eine Addition alle verrauschten Messwerte ergibt ebenfalls den Wert 454. Diese Addition kann beispielsweise in dem Server 50 erfolgen. Folglich spiegelt eine Addition der verrauschten Messwerte eine Addition der wahren Messwerte wieder.

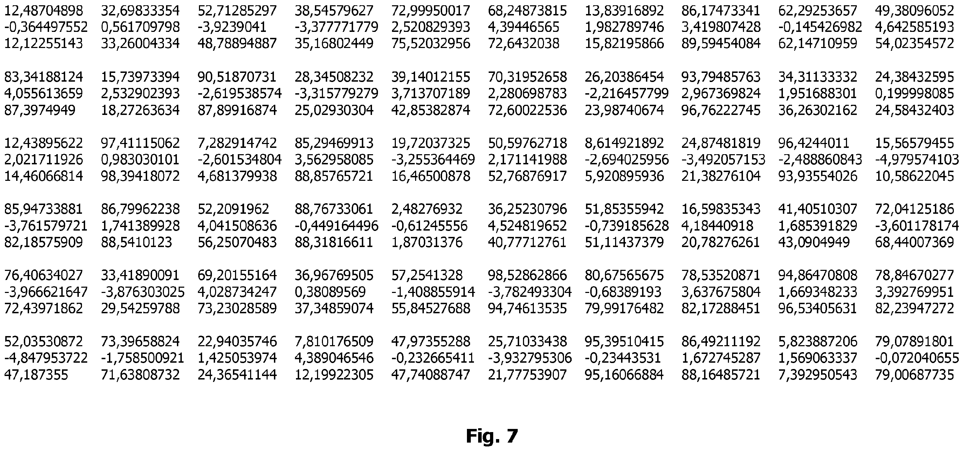

Fig. 7 zeigt eine zweite beispielhafte Reihe von Messwerten mit verrauschten Messwerten. Die Reihe von Messwerten der Fig. 7 ist eine Neuberechnung der Reihe von Messwerten der Fig. 6 mit anderen Zufallszahlen.

Eine Addition aller Messwerte mit Kundenbezug ergibt den Wert 489 und eine Addition aller verrauschter Messwerte ergibt den ähnlichen Wert 499. Folglich spiegelt eine Addition der verrauschten Messwerte eine Addition der wahren Messwerte wieder, so dass die Addition der verrauschten, d.h., anonymisierten, Messwerte beispielsweise von einem Netzbetreiber genutzt werden kann.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. System, umfassend einen Server (50), wobei der Server (50) umfasst:
eine Empfangsvorrichtung (52), die dazu eingerichtet ist, verrauschte Messwerte von einer Vielzahl von Smart-Meter-Gateways (10; 11) zu empfangen, und
eine Recheneinheit (54), die dazu eingerichtet ist, die verrauschten Messwerte der Vielzahl von Smart-Meter-Gateways (10; 11) zu aggregieren,
**dadurch gekennzeichnet, dass**
das System eine Vorrichtung zum Bereitstellen von Regelenergie umfasst; wobei
der Server (50) ferner eine Benachrichtigungsvorrichtung (58) umfasst, die dazu eingerichtet ist, die aggregierten Messwerte mit einem vorgegebenen Grenzwert zu Vergleichen und bei Überschreiten des vorgegebenen Grenzwerts eine Benachrichtigung an die Vorrichtung zum Bereitstellen von Regelenergie auszugeben, wobei
die Vorrichtung zum Bereitstellen von Regelenergie als Gas- oder Dieselaggregat ausgebildet und dazu eingerichtet ist, in Antwort auf die empfangene Benachrichtigung die Regelenergie zur erhöhen.

2. System nach Anspruch 1, wobei der Server (50), ferner umfasst:
eine Visualisierungsvorrichtung (56), die dazu eingerichtet ist, die aggregierten Messwerte zur Visualisierung für einen Nutzer aufzubereiten.

3. System nach einem der vorhergehenden Ansprüche, ferner umfassend ein Smart-Meter-Gateway (10), wobei das Smart-Meter-Gateway (10) umfasst:
ein erstes Kommunikationsmodul (12), das dazu eingerichtet ist, Messwerte von einem Zähler (21, 31, 41) zu empfangen,
eine erste Verarbeitungsvorrichtung (14), die dazu eingerichtet ist, den empfangenen Messwerten mathematisches Rauschen hinzuzufügen um verrauschte Messwerte zu erhalten, und
ein zweites Kommunikationsmodul (16), das dazu eingerichtet ist, die verrauschten Messwerte an den Server (50) zu senden.

4. System nach Anspruch 3, wobei die erste Verarbeitungsvorrichtung (14) dazu eingerichtet ist, auf die empfangenen Messwerte eine symmetrische Verteilung, insbesondere eine Normalverteilung, eine Gleichverteilung und/oder eine Laplace-Verteilung, anzuwenden.

5. System nach Anspruch 3 oder 4, wobei die von dem zweiten Kommunikationsmodul (16) an den Server (50) gesendeten Messwerte nicht mit Zeitdaten oder Nutzerdaten assoziiert sind.

6. System nach einem der Ansprüche 3 bis 5, wobei das Smart-Meter-Gateway (10) ferner ein Sicherheitsmodul (18) umfasst, welches dazu eingerichtet ist, die verrauschten Messwerte zu verschlüsseln.

7. System nach Anspruch 1, ferner umfassend einen Zähler (20; 30; 40), wobei der Zähler (20; 30; 40) umfasst:
eine Messvorrichtung (22), die dazu eingerichtet ist, Ressourcenverbräuche zu messen,
eine zweite Verarbeitungsvorrichtung (24), die dazu eingerichtet ist, den gemessenen Ressourcenverbräuchen mathematisches Rauschen hinzuzufügen um verrauschte Messwerte zu erhalten, und
ein drittes Kommunikationsmodul (26), das dazu eingerichtet ist, die verrauschten Messwerte an das Smart-Meter-Gateway (11) zu senden.

8. System nach Anspruch 7, wobei die zweite Verarbeitungsvorrichtung (24) dazu eingerichtet ist, auf die gemessenen Ressourcenverbräuche eine symmetrische Verteilung, insbesondere eine Normalverteilung, eine Gleichverteilung und/oder eine Laplace-Verteilung, anzuwenden.

9. System nach Anspruch 7 oder 8, wobei die von dem dritten Kommunikationsmodul (26) an das Smart-Meter-Gateway (10) gesendeten Messwerte nicht mit Zeitdaten oder Nutzerdaten assoziiert sind.

10. Verfahren, umfassend
Empfangen, durch einen Server (50), von verrauschten Messwerten von einer Vielzahl von Smart-Meter-Gateways (10; 11), und
Aggregieren, durch den Server (50), der empfangenen verrauschten Messwerte der Vielzahl von Smart-Meter-Gateways (10; 11),
**gekennzeichnet durch**
Vergleichen, durch den Server (50), der aggregierten Messwerte mit einem vorgegebenen Grenzwert,
Ausgeben, durch den Server (50), bei Überschreiten des vorgegebenen Grenzwerts, einer Benachrichtigung an eine Vorrichtung zum Bereitstellen von Regelenergie und
Erhöhen, durch die als Gas- oder Dieselaggregat ausgebildete Vorrichtung zum Bereitstellen von Regelenergie, in Antwort auf die empfangene Benachrichtigung der Regelenergie.

## Claims

1. System comprising a server (50), wherein the server comprises:
a receiving device (52) adapted to receive noisy measured values from a plurality of smart meter gateways (10; 11), and
a computing unit (54) which is set up to aggregate the noisy measured values of the plurality of smart meter gateways (10; 11),
**characterized in that**
the system comprises a device for providing control energy, wherein
the server (50) comprises
the server (50) further comprises a notification device (58) which is set up to compare the aggregated measured values with a predetermined limit value and, if the predetermined limit value is exceeded, to output a notification to the device for providing control energy, wherein
the device for providing control energy is designed as a gas or diesel unit and is set up to increase the control energy in response to the notification received.

2. System according to claim 1, wherein the server (50) further comprises:
a visualization device (56), which is set up to prepare the aggregated measured values for visualization for a user.

3. System according to any one of the preceding claims, further comprising a smart meter gateway (10), wherein the smart meter gateway (10) comprises:
a first communication module (12), which is set up to receive measured values from a counter (21, 31, 41),
a first processing device (14) adapted to add mathematical noise to the received measured values in order to obtain noisy measured values, and
a second communication module (16), which is set up to send the noisy measured values to the server (50).

4. System according to claim 3, wherein the first processing device (14) is set up to apply a symmetrical distribution, in particular a normal distribution, a uniform distribution and/or a Laplace distribution, to the received measured values.

5. System according to claim 3 or 4, wherein the measured values sent from the second communication module (16) to the server (50) are not associated with time data or user data.

6. System according to any one of claims 3 to 5, wherein the smart meter gateway (10) further comprises a security module (18) which is adapted to encrypt the noisy measured values.

7. System according to claim 1, further comprising a counter (20; 30; 40), wherein the counter (20; 30; 40) comprises:
a measuring device (22) which is set up to measure resource consumption,
a second processing device (24) adapted to add mathematical noise to the measured resource consumptions to obtain noisy measured values, and
a third communication module (26), which is set up to send the noisy measured values to the smart meter gateway (11).

8. System according to claim 7, wherein the second processing device (24) is set up to apply a symmetrical distribution, in particular a normal distribution, a uniform distribution and/or a Laplace distribution, to the measured resource consumptions.

9. System according to claim 7 or 8, wherein the measured values sent by the third communication module (26) to the smart meter gateway (10) are not associated with time data or user data.

10. Method, comprising
receiving, by a server (50), noisy measured values from a plurality of smart meter gateways (10; 11), and
aggregating, by the server (50), of the noisy measured values received from the large number of smart meter gateways (10; 11),
**characterized by**
comparing, by the server (50), of the aggregated measured values with a predefined limit value,
outputting, by the server (50), of a notification to a device for providing control energy when the predetermined limit value is exceeded, and
increasing, by the device designed as a gas or diesel genset for providing control energy, in response to the received notification of the control energy.

## Revendications

1. Système comprenant un serveur (50), le serveur (50) comprenant:
un dispositif de réception (52) qui est conçu pour recevoir des valeurs de mesure perturbées par le bruit provenant d'une pluralité de passerelles passerelle de compteur intelligent (10; 11), et
un dispositif informatique (54) qui est conçu pour agréger les valeurs de mesure perturbées par le bruit de la pluralité de passerelles passerelle de compteur intelligent (10; 11),
**caractérisé en ce que** le système comprend un dispositif pour fournir de l'énergie de réglage; dans lequel
le serveur (50) comprend en outre un dispositif de notification (58) qui est conçu pour comparer les valeurs de mesure agrégées à une valeur limite prédéterminée et, en cas de dépassement de la valeur limite prédéterminée, pour émettre une notification au dispositif pour fournir de l'énergie de réglage, dans lequel
le dispositif de fourniture d'énergie de réglage est conçu comme un groupe générateur à gaz ou diesel et est adapté pour augmenter l'énergie de réglage en réponse à la notification reçue.

2. Système selon la revendication 1, dans lequel le serveur (50), comprend en outre:
un dispositif de visualisation (56) qui est conçu pour préparer les valeurs de mesure agrégées en vue de leur visualisation par un utilisateur.

3. Système selon l'une quelconque des revendications précédentes, comprenant en outre une passerelle de compteur intelligent (10), la passerelle de compteur intelligent (10) comprenant:
un premier module de communication (12) qui est conçu pour recevoir des valeurs de mesure provenant d'un compteur (21, 31, 41),
un premier dispositif de traitement (14) conçu pour ajouter du bruit mathématique aux valeurs de mesure reçues afin d'obtenir des valeurs de mesure perturbées par le bruit, et
un deuxième module de communication (16) qui est conçu pour envoyer les valeurs de mesure perturbées par le bruit au serveur (50).

4. Système selon la revendication 3, dans lequel le premier dispositif de traitement (14) est conçu pour appliquer aux valeurs de mesure reçues une distribution symétrique, en particulier une distribution normale, une distribution uniforme et/ou une distribution de Laplace.

5. Système selon la revendication 3 ou 4, dans lequel les valeurs de mesure envoyées par le deuxième module de communication (16) au serveur (50) ne sont pas associées à des données de temps ou à des données d'utilisateur.

6. Système selon l'une quelconque des revendications 3 à 5, dans lequel la passerelle de compteur intelligent (10) comprend en outre un module de sécurité (18) qui est conçu pour chiffrer les valeurs de mesure distribution de Laplace.

7. Système selon la revendication 1, comprenant en outre un compteur (20; 30; 40), le compteur (20; 30; 40) comprenant:
un dispositif de mesure (22) qui est conçu pour mesurer les consommations de ressources,
un deuxième dispositif de traitement (24) qui est conçu pour ajouter du bruit mathématique aux consommations de ressources mesurées afin d'obtenir des valeurs de mesure perturbées par le bruit, et
un troisième module de communication (26), qui est conçu pour envoyer les valeurs de mesure perturbées par le bruit à la passerelle de compteur intelligent (11).

8. Système selon la revendication 7, dans lequel le deuxième dispositif de traitement (24) est conçu pour appliquer aux consommations de ressources mesurées une distribution symétrique, en particulier une distribution normale, une distribution uniforme et/ou une distribution de Laplace.

9. Système selon la revendication 7 ou 8, dans lequel les valeurs de mesure envoyées par le troisième module de communication (26) à la passerelle de compteur intelligent (10) ne sont pas associées à des données de temps ou à des données d'utilisateur.

10. Procédé, comprenant
la réception, par un serveur (50), de valeurs de mesure perturbées par le bruit provenant d'une pluralité de passerelles passerelle de compteur intelligent (10; 11), et
l'agrégation, par le serveur (50), des valeurs de mesure perturbées par le bruit reçues de la pluralité de passerelles passerelle de compteur intelligent (10; 11),
**caractérisé par**
la comparaison, par le serveur (50), des valeurs de mesure agrégées à une valeur limite prédéterminée,
l'émission, par le serveur (50), en cas de dépassement de la valeur limite prédéterminée, d'une notification à un dispositif de fourniture d'énergie de réglage, et
l'augmentation, par le dispositif conçu comme un groupe générateur à gaz ou diesel, pour fournir de l'énergie de réglage, en réponse à la notification reçue d'énergie de réglage.
